# EUROPÄISCHE PATENTSCHRIFT

(11) **EP 2 753 453 B1**
(45) Veröffentlichungstag und Bekanntmachung des Hinweises auf die Patenterteilung: **08.02.2017**
(21) Anmeldenummer: 12754006.0
(22) Anmeldetag: 05.09.2012
(51) Int. Cl.: B23Q 3/155, B23Q 3/157

(54) **WERKZEUGMASCHINE UND VERFAHREN ZUM WERKZEUGWECHSEL**
MACHINE TOOL, AND TOOL REPLACEMENT METHOD
MACHINE-OUTIL ET PROCÉDÉ DE CHANGEMENT D'OUTIL

(30) Priorität: 09.09.2011 DE 102011053467
(43) Veröffentlichungstag der Anmeldung: 16.07.2014
(73) Patentinhaber: MAG IAS GmbH, 73033 Göppingen (DE)
(72) Erfinder: ABELN, Tobias, 70599 Stuttgart (DE); POMPE, Walter, 73333 Gingen/Fils (DE); ELL, Benedikt, 73312 Geislingen (DE); GUNZENHAUSER, Markus, 89558 Böhmenkirch (DE); HOMMEL, Gerhard, 73121 Geislingen (DE)
(74) Vertreter: Hoeger, Stellrecht & Partner Patentanwälte mbB
(86) Internationale Anmeldenummer: PCT/EP2012/067310
(87) Internationale Veröffentlichungsnummer: WO 2013/034591

(56) Entgegenhaltungen:
- EP-A1- 1 733 840
- DD-A1- 215 269
- DE-A1- 3 440 356
- DE-A1- 10 225 143
- US-A- 4 620 363

## Beschreibung

Die Erfindung betrifft eine Werkzeugmaschine, umfassend ein Maschinengestell, mindestens eine Werkzeugspindel, welche an dem Maschinengestell angeordnet ist und relativ zu diesem verschieblich ist, und einen Werkstückträger.

Die Erfindung betrifft ferner ein Verfahren zum Werkzeugwechsel.

Aus der DE 90 14 433 U1 ist eine Werkzeugmaschine für die spangebende Bearbeitung mittels drehender Werkzeuge mit einem Maschinenbett bekannt. Neben einer vertikalen Arbeitsspindel ist ein Werkzeugwechsler mit einem Doppelgreifer an einem Spindelkasten angeordnet.

Aus der DE 102 57 151 A1 ist eine Werkzeugmaschine für die spanabhebende Bearbeitung von Werkstücken durch eine mindestens eine Bearbeitungsspindel aufweisende Bearbeitungseinheit bekannt, wobei ein Werkzeugmagazin vorgesehen ist, welches zum Vorhalten und Wechseln der Werkzeuge auf der Bearbeitungsspindel dient. Das Werkzeugmagazin ist von einem Tragbalken gehalten, welcher das Werkzeugmagazin durchdringt.

Aus der DE 102 25 143 A1 ist eine Werkzeugmaschine mit einer in zumindest einer ersten und einer zweiten Achse verfahrbaren Werkzeugspindel zur Aufnahme von Werkzeugen, einem Hintergrundmagazin, in dem Werkzeuge gespeichert sind, und einer Übergabevorrichtung, die die Werkzeuge zwischen dem Hintergrundmagazin und einer Übergabeposition verfährt, bekannt. An der Werkzeugmaschine ist ein Maschinenmagazin zur Aufnahme von Werkzeugen vorgesehen, aus dem Werkzeuge in die Werkzeugspindel gewechselt werden. Die Übergabeposition ist dem Maschinenmagazin zugeordnet, derart, dass die Übergabevorrichtung Werkzeuge zwischen dem Hintergrundmagazin und dem Maschinenmagazin wechselt.

Aus der US 4,620,363 ist ebenfalls eine Werkzeugmaschine bekannt.

Aus der DE 34 40 356 A1 ist eine Werkzeugmaschine mit automatischem Wechsel der Werkzeuge und der Werkzeugmagazine bekannt.

Aus der EP 1 733 840 A1 ist eine Bearbeitungsmaschinenanordnung mit Roboter und Werkzeugmaschine bekannt.

Aus der DD 215 269 A1 ist eine Vorrichtung zur Speicherung kompletter Werkzeugmagazine an automatischen Werkzeugmaschinen bekannt.

Der Erfindung liegt die Aufgabe zugrunde, eine Werkzeugmaschine bereitzustellen, an der ein effektiver Werkzeugaustausch durchführbar ist mit kurzen Span-zu-Span-Zeiten.

Diese Aufgabe wird bei der eingangs genannten Werkzeugmaschine erfindungsgemäß dadurch gelöst, dass eine Lagereinrichtung für Werkzeuge, welche an dem Maschinengestell angeordnet ist, vorgesehen ist, dass die Lagereinrichtung einen Bereich mit Lagerplätzen aufweist, welcher oberhalb eines Arbeitsraums liegt, und einen Bereich aufweist, welcher neben dem Arbeitsraum liegt, dass eine Kettenlagereinrichtung, welche in Kommunikation mit der Lagereinrichtung und der mindestens einen Werkzeugspindel steht, vorgesehen ist, dass die Kettenlagereinrichtung eine Aushebeeinrichtung umfasst, durch welche ein oder mehrere Werkzeuge in einer Richtung parallel zu einer Erstreckungsrichtung der mindestens einen Werkzeugspindel verschieblich sind und dass die Kettenlagereinrichtung so angeordnet und ausgebildet ist, dass gleichzeitig mit einem Werkzeugwechsel an der mindestens einen Werkzeugspindel ein Werkzeugtausch zwischen der Lagereinrichtung und der Kettenlagereinrichtung durchführbar ist.

Die Lagereinrichtung an dem Maschinengestell bildet ein Hintergrundmagazin für Werkzeuge. Die Kettenlagereinrichtung bildet ein Pufferlager für Werkzeuge. An der Lagereinrichtung, welche das Hintergrundmagazin bildet, lassen sich sehr viele Werkzeuge direkt an der Werkzeugmaschine lagern. Die Anzahl der Lagerplätze an der Kettenlagereinrichtung ist geringer, um einen effektiven Werkzeugaustausch zu ermöglichen. Es lassen sich aber dennoch so viele Werkzeuge lagern, dass mit kurzen Span-zu-Span-Zeiten auch komplexe Bearbeitungsvorgänge, für die mehrere unterschiedliche Werkzeuge notwendig sind, durchführen lassen. Eine Kettenlagereinrichtung lässt sich relativ platzsparend ausbilden, auch wenn eine Mehrzahl von Lagerplätzen (beispielsweise 50 oder mehr) vorhanden sind. Insbesondere lässt sich eine Kettenlagereinrichtung in einer solchen Länge ausbilden, dass über sie auch eine Mehrzahl von Werkzeugspindeln (beispielsweise zwei Werkzeugspindeln) bedienbar sind.

Durch eine Kettenlagereinrichtung ist es insbesondere möglich, gleichzeitig einen Werkzeugwechselvorgang an der mindestens einen Werkzeugspindel und einen Werkzeugaustausch zwischen der Lagereinrichtung und der Kettenlagereinrichtung durchzuführen. Es lassen sich dadurch sowieso vorhandene Bearbeitungsstillstandszeiten, die für einen Werkzeugwechsel an der mindestens einen Werkzeugspindel notwendig sind, für einen Werkzeugaustausch zwischen der Lagereinrichtung und der Kettenlagereinrichtung effektiv nutzen.

An einer Kettenlagereinrichtung lassen sich unterschiedliche Lagerplätze unterschiedlich behandeln. Insbesondere lassen sich bestimmte Lagerplätze, insbesondere wenn diese in einer bestimmten Position sind, ausheben, das heißt insbesondere in einer Richtung parallel zu der mindestens einen Werkzeugspindel verschieben. Dadurch ist ein Werkzeugwechsel an der mindestens einen Werkzeugspindel durchführbar. Andere Lagerplätze werden durch diese Aushebebewegung nicht beeinflusst, sodass in diesem Zeitraum insbesondere ein Werkzeugwechsel zwischen der Lagereinrichtung und der Kettenlagereinrichtung durchführbar ist.

Weiterhin ist es auch möglich, dass pro Werkzeugspindel an der Kettenlagereinrichtung mehrere Lagerplätze ausgehoben werden. Dadurch lässt sich beispielsweise ein Lagerplatz als Bringplatz für ein Werkzeug an die Werkzeugspindel und ein Lagerplatz als Holplatz für ein Werkzeug von der Werkzeugspindel ausbilden. Dadurch wiederum lassen sich die Verfahrzeiten während eines Werkzeugwechselvorgangs an der mindestens einen Werkzeugspindel gering halten. Dies wiederum trägt bei zu einer niedrigen Span-zu-Span-Zeit.

Die Lagereinrichtung weist einen Bereich mit Lagerplätzen auf, welcher oberhalb eines Arbeitsraums liegt, und weist einen Bereich auf, welcher neben dem Arbeitsraum liegt. Über den Bereich oberhalb des Arbeitsraums lassen sich der Kettenlagereinrichtung Werkzeuge bereitstellen. Über den Bereich neben dem Arbeitsraum lassen sich Werkzeuge der Lagereinrichtung zuführen und entnehmen. Beispielsweise lassen sich diese manuell zuführen und entnehmen.

Die Kettenlagereinrichtung umfasst eine Aushebeeinrichtung, durch welche ein oder mehrere Lagerplätze und/oder Werkzeuge in einer Richtung parallel zur einer Erstreckungsrichtung der mindestens einen Werkzeugspindel verschieblich sind. Die Aushebeeinrichtung kann dabei auf einen Lagerplatz wirken und durch dessen Verschiebung ein Werkzeug verschieben oder sie kann direkt auf ein Werkzeug wirken. Durch die Aushebeeinrichtung lässt sich ein Werkzeug bezogen auf die Richtung parallel zu einer Erstreckungsrichtung der Werkzeugspindel entsprechend bezüglich dieser positionieren. Dadurch lässt sich ein schneller und effektiver Werkzeugwechsel durchführen. Durch die Aushebeeinrichtung lässt sich die entsprechende Verschiebung in der Richtung parallel zur Erstreckungsrichtung der mindestens einen Werkzeugspindel für eine Untermenge aller Lagerplätze der Kettenlagereinrichtung durchführen, das heißt die entsprechende Verschiebungsbewegung muss nicht für alle Lagerplätze der Kettenlagereinrichtung durchgeführt werden. Dies ermöglicht es, dass gleichzeitig mit einem Werkzeugaustausch an der mindestens einen Werkzeugspindel ein Werkzeugwechsel zwischen der Kettenlagereinrichtung und der Lagereinrichtung durchgeführt wird. Dadurch ergeben sich kurze Werkzeugwechselzeiten und die für einen Werkzeugaustausch an der mindestens einen Werkzeugspindel benötigte Zeit lässt sich effektiv nutzen. Ferner ist es über die Aushebeeinrichtung möglich, ein ausgehobenes Werkzeug bzw. einen ausgehobenen Lagerplatz durch die mindestens eine Werkzeugspindel direkt anzufahren. Dadurch lässt sich ein Abholvorgang eines Werkzeugs durch die mindestens eine Werkzeugspindel an der Kettenlagereinrichtung und ein Bringvorgang eines Werkzeugs von der mindestens einen Werkzeugspindel an die Kettenlagereinrichtung auf effektive und insbesondere zeitsparende Weise durchführen.

Die Kettenlagereinrichtung ist so angeordnet und ausgebildet, dass gleichzeitig mit einem Werkzeugwechsel an der mindestens einen Werkzeugspindel ein Werkzeugtausch zwischen der Lagereinrichtung und der Kettenlagereinrichtung durchführbar ist. Dadurch lässt sich die Stillstandszeit, die für einen Werkzeugaustausch an der mindestens einen Werkzeugspindel benötigt wird, effektiv für einen Werkzeugaustausch zwischen der Lagereinrichtung und der Kettenlagereinrichtung nutzen.

Insbesondere ist die Kettenlagereinrichtung mindestens einer ersten Werkzeugspindel und einer zweiten Werkzeugspindel zugeordnet. Durch die gleiche Kettenlagereinrichtung lässt sich ein Werkzeugaustausch sowohl an der ersten Werkzeugspindel als auch an der zweiten Werkzeugspindel durchführen. Dieser Werkzeugaustausch kann dabei auch synchron für die beiden Werkzeugspindeln erfolgen.

Insbesondere bildet die Lagereinrichtung ein erstes Magazin (Hintergrundmagazin) für Werkzeuge und die Kettenlagereinrichtung bildet ein zweites Magazin (Puffermagazin) für Werkzeuge. Es lässt sich dadurch einerseits eine große Anzahl von Werkzeugen an der Werkzeugmaschine vorhalten und zum anderen lässt sich ein effektiver Werkzeugaustausch realisieren.

Insbesondere ist eine Lagerkapazität für Werkzeuge des ersten Magazins größer als die Lagerkapazität der Kettenlagereinrichtung. Dadurch lässt sich zum einen eine große Anzahl von Werkzeugen an der Werkzeugmaschine lagern und zum anderen lässt sich ein zeiteffektiver Werkzeugwechsel über das zweite Magazin durchführen.

Bei einer Ausführungsform umfasst die Lagereinrichtung mindestens 30 Lagerplätze für Werkzeuge. Insbesondere umfasst die Lagereinrichtung mindestens 50 und vorzugsweise mindestens 80 Lagerplätze.

Bei einer weiteren Ausführungsform umfasst die Kettenlagereinrichtung beispielhaft zwischen 30 und 50 Lagerplätze für Werkzeuge.

Wenn eine manuelle Zuführung vorgesehen ist, dann ist es besonders vorteilhaft, wenn der Bereich, welcher neben dem Arbeitsraum liegt, einen Abstand zu einem Untergrund hat, auf welchem das Maschinenbett aufsteht, welcher höchstens 1,5 m beträgt. Dadurch muss ein Werkzeug nicht "über Kopf" eines Bedieners gehoben werden. Grundsätzlich ist die Lagerkapazität umso höher, je kleiner der Abstand zu dem Boden ist. Ein kleiner Abstand kann auch bei einer automatischen Zuführung und Abführung von Werkzeugen vorteilhaft sein.

Beispielsweise hat die Lagereinrichtung in Draufsicht eine L-förmige Gestalt. Der Bereich oberhalb des Arbeitraums und der Bereich neben dem Arbeitsraum sind quer zueinander orientiert.

Günstig ist es, wenn die Lagereinrichtung eine Umlauffördereinrichtung umfasst, welche insbesondere als Kettenförderer ausgebildet ist. Dadurch lässt sich eine Lagerkapazität über im Wesentlichen die gesamte Oberfläche der Lagereinrichtung erreichen. Durch eine Endlosausbildung über eine Umlauffördereinrichtung lassen sich auf einfache Weise Werkzeuge transportieren und beispielsweise der Kettenlagereinrichtung zuführen.

Ganz besonders vorteilhaft ist es, wenn die Kettenlagereinrichtung einen Umlaufkettenförderer umfasst. Die Kette ist endlos ausgebildet. Durch einen entsprechenden Umlauf lassen sich Lagerplätze transportieren, um bestimmte Werkzeuge einer Werkzeugspindel zuzuführen bzw. von dieser abzuführen.

Insbesondere stellt die Aushebeeinrichtung einen Aushebeweg im Bereich zwischen 20 mm und 60 mm bereit. Dadurch lässt sich ein effektives Lösen bzw. Fixieren eines Werkzeugs an einer Werkzeugspindel erreichen.

Ganz besonders vorteilhaft ist es, wenn die Aushebeeinrichtung mindestens einen ersten Aushebebereich und einen zweiten Aushebebereich umfasst, durch welche jeweils ein oder mehrere Lagerplätze und/oder Werkzeuge synchron aushebbar sind, wobei insbesondere der erste Aushebebereich einer ersten Werkzeugspindel und der zweite Aushebebereich einer zweiten Werkzeugspindel zugeordnet ist. Es lässt sich dadurch über eine Aushebeeinrichtung eine Aushebebewegung an räumlich getrennten Bereichen der Kettenlagereinrichtung durchführen, um so einen synchronen Werkzeugaustausch gleichzeitig an der ersten Werkzeugspindel als auch an der zweiten Werkzeugspindel zu ermöglichen. Dadurch ergeben sich kurze Span-zu-Span-Zeiten mit zeiteffektiver Werkstückbearbeitung.

Insbesondere liegen der erste Aushebebereich und der zweite Aushebebereich symmetrisch zueinander.

Beispielsweise ist die Aushebeeinrichtung so angeordnet, dass durch sie ein oder mehrere Lagerplätze und/oder Werkzeuge aushebbar sind, welche an einer Unterseite der Kettenlagereinrichtung positioniert sind, welche einem Maschinenbett zugeordnet ist. Die entsprechenden aushebbaren Lagerplätze lassen sich dann direkt durch eine Werkzeugspindel anfahren, um einen zeiteffektiven Werkzeugaustausch zu ermöglichen.

Bei einem Ausführungsbeispiel umfasst die Aushebeeinrichtung mindestens eine verschiebliche Spindel, welche einem oder mehreren Lagerplätzen der Kettenlagereinrichtung zugeordnet ist. Durch die mindestens eine verschiebliche Spindel lässt sich eine Verschiebungsbewegung zur Bewirkung eines Aushebewegs bereitstellen. Beispielsweise ist eine einzige verschiebliche Spindel vorgesehen.

Es ist insbesondere vorteilhaft, wenn durch die Aushebeeinrichtung mindestens zwei (insbesondere nebeneinander liegende) Lagerplätze und/oder Werkzeuge aushebbar sind. Beispielsweise ist dann ein entsprechender Lagerplatz ein Bringplatz und ein benachbarter Lagerplatz ein Holplatz. Durch die Aushebeeinrichtung lässt sich gleichzeitig der Bringplatz und der Holplatz in die entsprechende Aushebeposition bringen. Der Holplatz kann dann durch die mindestens eine Werkzeugspindel angefahren werden und an diesen kann direkt ein Werkzeug abgegeben werden. Die mindestens eine Werkzeugspindel kann dann den Bringplatz anfahren und dort das neue Werkzeug abholen. Zwischen dem Anfahren von Holplatz und Bringplatz muss die Aushebeeinrichtung selber keine Bewegung durchführen, da durch einen Bewegungsvorgang die Aushebeposition sowohl für den Bringplatz als auch den Holplatz erreicht ist.

Insbesondere ist der mindestens einen Spindel ein Verschiebungsaktuator zugeordnet. Dieser kann dabei beispielsweise einen motorischen Antrieb, Fluidantrieb, Federantrieb oder dergleichen umfassen.

Beispielsweise umfasst der mindestens eine Verschiebungsaktuator einen Antrieb wie beispielsweise motorischen Antrieb oder Fluidantrieb.

Bei einem Ausführungsbeispiel ist die mindestens eine Spindel Teil eines Kugelgewindetriebs. Dieser Kugelgewindetrieb umfasst insbesondere einen Stellmotor. Der entsprechende Verschiebungsaktuator mit Stellmotor und Kugelgewindetrieb kann dann neben dem Antrieb einer Vorschubbewegung zum Erreichen der Aushebeposition und einer entsprechenden Rückhubbewegung auch die ausgezeichneten Stellungen (Aushebeposition und nicht ausgefahrene Position) feststellen.

Günstigerweise ist mindestens eine Übergabestation zwischen der Lagereinrichtung und der Kettenlagereinrichtung vorgesehen. Dadurch lassen sich Werkzeuge zwischen der Lagereinrichtung und der Kettenlagereinrichtung transportieren.

Der Erfindung liegt ferner die Aufgabe zugrunde, ein Verfahren zum Werkzeugwechsel bereitzustellen, durch welches sich minimierte Span-zu-Span-Zeiten ergeben.

Diese Aufgabe wird bei dem eingangs genannten Verfahren erfindungsgemäß dadurch gelöst, dass die mindestens eine Werkzeugspindel die Kettenlagereinrichtung anfährt, wobei an der Kettenlagereinrichtung ein Lagerplatz und/oder ein Werkzeug in einer Richtung parallel zu einer Achse der mindestens einen Werkzeugspindel ausgehoben ist oder wird und dass gleichzeitig mit einem Werkzeugwechsel zwischen der mindestens einen Werkzeugspindel und der Kettenlagereinrichtung ein Werkzeugaustausch zwischen der Lagereinrichtung und der Kettenlagereinrichtung durchgeführt wird.

Das erfindungsgemäße Verfahren weist die bereits im Zusammenhang mit der erfindungsgemäßen Werkzeugmaschine erläuterten Vorteile auf.

Weitere vorteilhafte Ausgestaltungen des erfindungsgemäßen Verfahrens wurden bereits im Zusammenhang mit der erfindungsgemäßen Werkzeugmaschine erläutert.

Insbesondere lässt sich das erfindungsgemäße Verfahren an der erfindungsgemäßen Werkzeugmaschine durchführen.

Durch die Kettenlagereinrichtung ist es möglich, ohne eine Umlaufbewegung gleichzeitig einen Werkzeugaustausch an der mindestens einen Werkzeugspindel und einen Werkzeugaustausch zwischen der Lagereinrichtung und der Kettenlagereinrichtung durchzuführen. Dies wird dadurch erreicht, dass nur ein Teilbereich der Kettenlagereinrichtung für einen Werkzeugwechsel zwischen der mindestens einen Werkzeugspindel und der Kettenlagereinrichtung ausgehoben werden muss.

Es wird gleichzeitig mit einem Werkzeugwechsel zwischen der mindestens einen Werkzeugspindel und der Kettenlagereinrichtung und einem Werkzeugaustausch zwischen der Lagereinrichtung und der Kettenlagereinrichtung durchgeführt. Dadurch ergeben sich kurze Span-zu-Span-Zeiten, auch wenn komplexe Bearbeitungsvorgänge an Werkstücken mit einer Vielzahl von Werkzeugen durchgeführt werden müssen.

Günstig ist es, wenn für einen Werkzeugaustausch an der mindestens einen Werkzeugspindel gleichzeitig mindestens ein Bringplatz für ein Werkzeug und ein Holplatz für ein Werkzeug ausgehoben sind. Dadurch lassen sich eine Werkzeugabgabe durch die mindestens eine Werkzeugspindel und eine Werkzeugabholung durch die mindestens eine Werkzeugspindel durch Verfahrbewegung der mindestens einen Werkzeugspindel insbesondere in einer Richtung (X-Richtung) durchführen, ohne dass während diesen Verfahrbewegungen eine Bewegung einer entsprechenden Aushebeeinrichtung in der Richtung parallel zu der Achse der mindestens einen Werkzeugspindel (Z-Achse) notwendig ist.

Die nachfolgende Beschreibung bevorzugter Ausführungsformen dient im Zusammenhang mit den Zeichnungen der näheren Erläuterung der Erfindung. Es zeigen:
- Figur 1: eine perspektivische Teildarstellung eines Ausführungsbeispiels einer erfindungsgemäßen Werkzeugmaschine (ohne Verkleidung und mit einer Teildarstellung einer Lagereinrichtung), wobei Werkzeuge über eine Störkontur angedeutet sind;
- Figur 2: die Werkzeugmaschine gemäß Figur 1 in einer Seitenansicht;
- Figur 3: die Werkzeugmaschine gemäß Figur 1 in einer Vorderansicht;

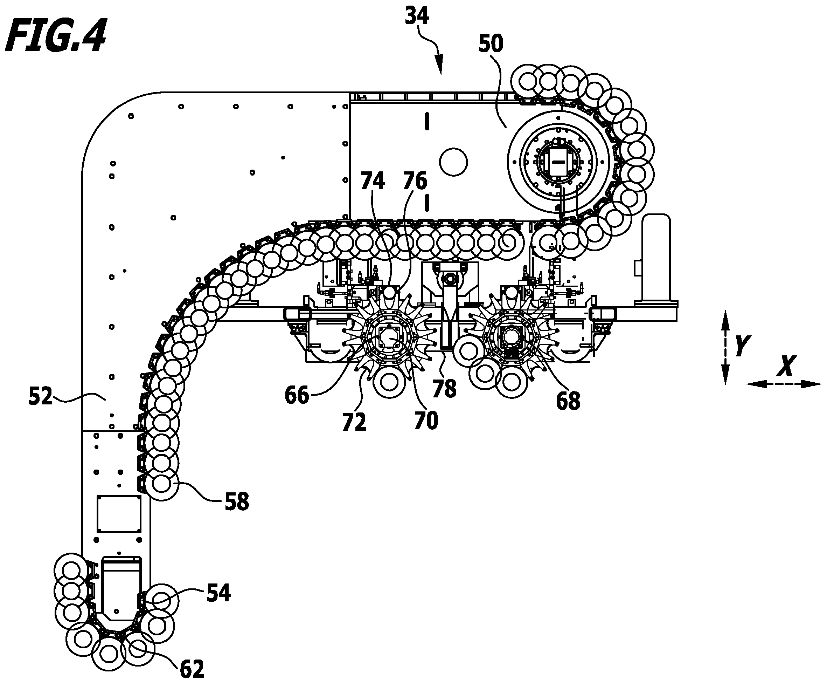

- Figur 4: ein Ausführungsbeispiel einer Lagereinrichtung (erstes Magazin) mit Lagerscheiben (zweites Magazin) bei der Werkzeugmaschine gemäß Figur 1;

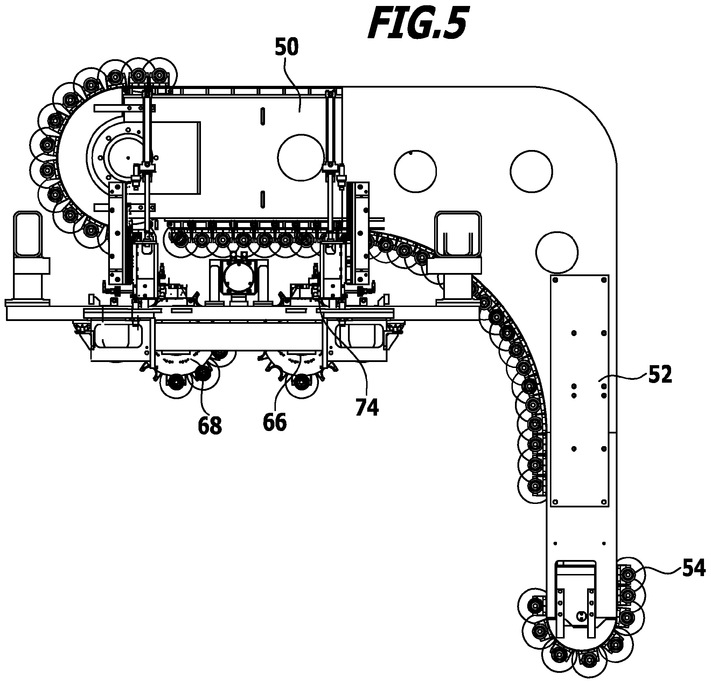

- Figur 5: eine Ansicht des Lagersystems gemäß Figur 5 von einer anderen Seite her;
- Figur 6: ein zweites Ausführungsbeispiel eines Lagersystems, wobei Werkzeuge über eine Störkontur angedeutet sind;
- Figur 7: eine Ansicht einer Kettenlagereinrichtung gemäß Figur 6 in der Richtung A in einer Aushebeposition;
- Figur 8: die gleiche Ansicht wie Figur 7 in einer nicht ausgehobenen Position;
- Figur 9: eine Schnittansicht längs der Linie 9,10-9,10 gemäß Figur 6 in der ausgehobenen Position;
- Figur 10: die gleiche Ansicht wie Figur 9 in der nicht ausgehobenen Position;
- Figur 11: eine Schnittansicht längs der Linie 11,12-11,12 gemäß Figur 6 in der ausgehobenen Position; und
- Figur 12: die gleiche Ansicht wie Figur 11 in der nicht ausgehobenen Position.

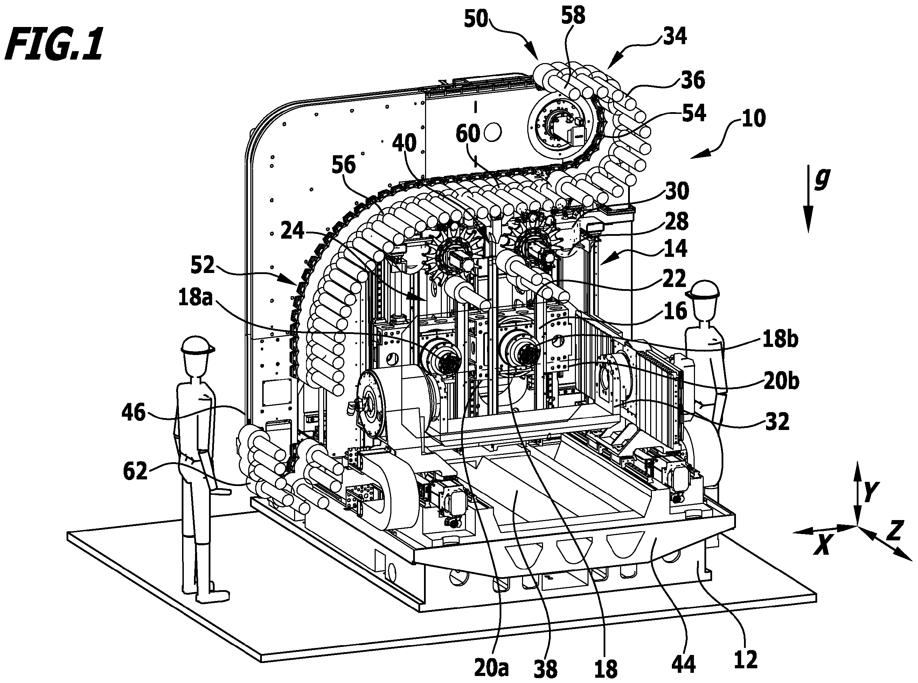

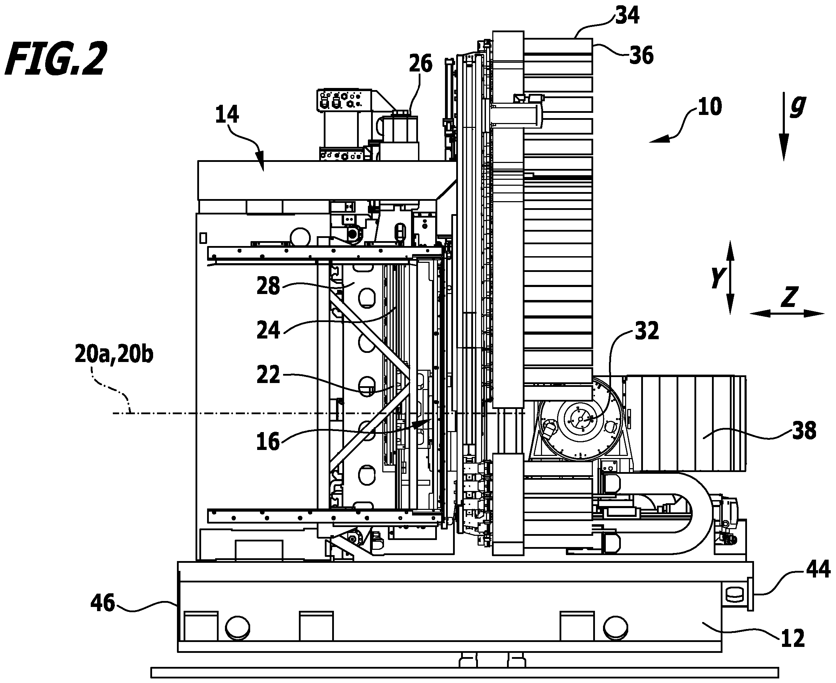

Ein Ausführungsbeispiel einer Werkzeugmaschine ist ein Bearbeitungszentrum. Eine Ausführungsform eines Bearbeitungszentrums, welches in den Figuren 1 bis 3 in Teildarstellung (ohne Verkleidung) schematisch gezeigt und dort mit 10 bezeichnet ist, umfasst ein Maschinenbett 12, an welchem ein Maschinengestell 14 angeordnet ist. Das Maschinengestell 14 ist portalartig ausgebildet und ragt in einer bezogen auf die Schwerkraftrichtung g vertikalen Richtung über das Maschinenbett 12 hinaus. An dem Maschinengestell 14 ist eine Werkzeugträgereinrichtung 16 gehalten, welche mindestens eine Werkzeugspindel 18 umfasst.

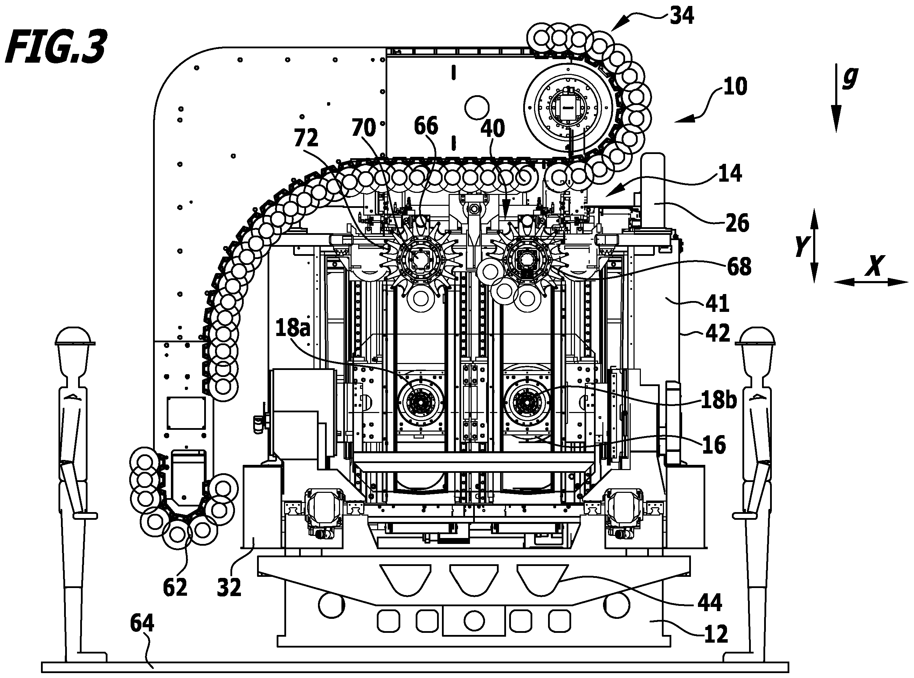

Bei dem gezeigten Ausführungsbeispiel umfasst die Werkzeugträgereinrichtung 16 eine erste Werkzeugspindel 18a und eine zweite Werkzeugspindel 18b. Ein an den jeweiligen Werkzeugspindeln 18a, 18b gehaltenes Werkzeug ist um eine Rotationsachse 20a, 20b rotierbar. Die Rotationsachsen 20a, 20b liegen parallel zueinander. Sie sind parallel zu einer Z-Richtung orientiert, welche bei der Darstellung gemäß Figur 3 senkrecht zur Zeichenebene liegt. Die Z-Richtung ist bezogen auf die Schwerkraftrichtung g insbesondere eine horizontale Richtung.

Die Werkzeugträgereinrichtung 16 ist als Schlitten 22 ausgebildet, welcher an einer Schlittenführung 24 gehalten ist und über die Schlittenführung 24 in einer Y-Richtung (Richtung und Gegenrichtung) linear beweglich ist. Die Y-Richtung liegt quer und insbesondere senkrecht zur Z-Richtung. Bezogen auf die Schwerkraftrichtung g ist die Y-Richtung insbesondere eine vertikale Richtung.

Zum Antrieb der Bewegung des Schlittens 22 in der Y-Richtung und zu dessen Positionierung ist dem Schlitten 22 eine Antriebseinrichtung 26 zugeordnet. Diese kann beispielsweise einen Kugelgewindetrieb oder einen Linearmotor umfassen.

Der Schlitten 22 ist selber an einem Schlitten 28 gehalten, welcher in einer X-Richtung (Richtung und Gegenrichtung) an einer Schlittenführung 30 linear verschieblich ist. Zur Verschiebung und Positionierung ist ein entsprechender Antrieb vorgesehen. Die X-Richtung ist quer und insbesondere senkrecht zu der Y-Richtung und der Z-Richtung. Die X-Richtung ist bezogen auf die Schwerkraftrichtung g insbesondere eine horizontale Richtung.

An dem Maschinenbett 12 ist (mindestens) ein Werkstückträger 32 angeordnet. Die erste Werkzeugspindel 18a und die zweite Werkzeugspindel 18b und damit daran gehaltene Werkzeuge und der Werkstückträger 32 sind in der Z-Richtung (Richtung und Gegenrichtung) relativ zueinander beweglich. Ein an dem Werkstückträger 32 gehaltenes Werkstück und die Werkzeugspindel 18a bzw. 18b sind dadurch relativ zueinander in der X-Richtung als erste Richtung, der Y-Richtung als zweite Richtung und der Z-Richtung als dritte Richtung verschieblich.

Bei einem Ausführungsbeispiel sind die Werkzeugspindeln 18a, 18b in der Z-Richtung zur Bearbeitung eines Werkstücks nicht beweglich und der Werkstückträger 32 ist in der Z-Richtung verschieblich an dem Maschinenbett gehalten. Dem Werkstückträger 32 ist dazu ein Antrieb zugeordnet.

Bei einem alternativen Ausführungsbeispiel sind die erste Werkzeugspindel 18a und die zweite Werkzeugspindel 18b verschieblich an der Werkzeugträgereinrichtung 16 gehalten, um eine Z-Verschieblichkeit zu ermöglichen.

Es ist auch möglich, eine Z-Verschieblichkeit der Werkzeugspindeln 18a, 18b an der Werkzeugträgereinrichtung 16 und eine Z-Verschieblichkeit des Werkstückträgers 32 an dem Maschinenbett zu kombinieren.

Es kann beispielsweise auch vorgesehen sein, dass der Werkstückträger 32 um eine beispielsweise vertikale und/oder horizontale Achse drehbar ist.

Ein entsprechendes Bearbeitungszentrum ist beispielsweise in der WO 2009/033920 A1 beschrieben. Auf diese Druckschrift wird Bezug genommen und diese Druckschrift wird zum Teil der Offenbarung gemacht.

Bei dem gezeigten Ausführungsbeispiel weist das Bearbeitungszentrum 10 eine Lagereinrichtung 34 für Werkzeuge 36 auf, welche mit einem Teilbereich oberhalb eines Arbeitsraums 38, in welchem Werkstücke bearbeitet werden, angeordnet ist. Die Werkzeuge 36 sind über ihre Störkontur (maximale äußeren Abmessungen) angedeutet.

Ferner ist eine Werkzeugwechseleinrichtung 40 vorgesehen, über welche Werkzeuge 36 an die Werkzeugspindeln 18a und 18b einsetzbar sind und von dieser entnehmbar sind.

Das Bearbeitungszentrum 10 kann auch nur eine einzige Werkzeugspindel umfassen oder mehr als zwei Werkzeugspindeln umfassen.

Das Bearbeitungszentrum 10 weist eine Steuerungseinrichtung 41 auf, welche mindestens teilweise in einem Schaltkasten 42 angeordnet ist. Über die Steuerungseinrichtung 41 lassen sich Abläufe der Werkstückbearbeitung steuern.

Das Bearbeitungszentrum 10 hat eine Vorderseite 44 und eine Rückseite 46. Der Arbeitsraum 38 weist zu der Vorderseite 44 zu.

Die Lagereinrichtung 34 ist Teil eines Lagersystems 48. Die Lagereinrichtung 34, welche an dem Maschinengestell 14 angeordnet ist, umfasst einen ersten Bereich 50, welcher oberhalb des Arbeitsraums 38 angeordnet ist. Ferner umfasst die Lagereinrichtung 34 einen zweiten Bereich 52, welcher seitlich neben dem Arbeitsraum angeordnet ist. Die Lagereinrichtung 34 hat eine in der Draufsicht L-förmige Gestalt. Sie umfasst eine Umlauffördereinrichtung 54, welche insbesondere als Kettenförderer ausgebildet ist. An der Umlauffördereinrichtung 54 sind Lagerplätze 56 angeordnet, wobei ein Lagerplatz 56 jeweils ein Werkzeug 58 aufnehmen kann. Ein Lagerplatz 56 weist eine entsprechende Schnittstelle beispielsweise für eine HSK-Aufnahme auf. Durch die Umlauffördereinrichtung 54 lassen sich die Lagerplätze 56 und damit auch Werkzeuge 58 in einem geschlossenen Umlauf transportieren. Es lassen sich dadurch Werkzeuge 58 in einem Bereich 60 oberhalb (bezogen auf die Schwerkraftrichtung g) des Arbeitsraums 38 den Werkzeugspindeln 18a, 18b bereitstellen.

Der zweite Bereich 52 der Lagereinrichtung 34 hat an einer Unterseite 62 einen Abstand zu einem Boden 64 (vergleiche insbesondere Figur 3), welcher höchstens 1,5 m beträgt. Dadurch kann in der Nähe der Unterseite 62 ein Bediener die Lagereinrichtung 34 beladen bzw. entladen, das heißt es können dort insbesondere manuell Werkzeuge ausgetauscht werden. Es ist beispielsweise auch möglich, dass dem zweiten Bereich 52 ein eigene Werkzeugbeladestation/Werkzeugentladestation zugeordnet ist, durch die automatisch die Lagereinrichtung 34 beladbar und entladbar ist.

Die Lagereinrichtung 34 bildet ein erstes Magazin für Werkzeuge für die Werkzeugmaschine 10. Sie weist eine Vielzahl von Lagerplätzen 56 auf. Insbesondere weist sie mehr als dreißig Lagerplätze auf. Bei einem Ausführungsbeispiel weist die erste Lagereinrichtung 34 zweiundneunzig Lagerplätze 56 auf.

Das Lagersystem 48 umfasst ferner ein erstes Scheibenlager 66 und ein zweites Scheibenlager 68. Das erste Scheibenlager 66 ist der ersten Werkzeugspindel 18a zugeordnet und das zweite Scheibenlager 68 ist der zweiten Werkzeugspindel 18b zugeordnet.

Die Scheibenlager 66, 68 sind jeweils um eine Achse 70 drehbar an dem Maschinengestell 14 angeordnet. Die Drehachse 70 ist dabei parallel zu der Z-Richtung ausgerichtet.

Das erste Scheibenlager 66 und das zweite Scheibenlager 68 sind in der X-Richtung beabstandet zueinander. Dieser Abstand zwischen dem ersten Scheibenlager 66 und dem zweiten Scheibenlager 68 ist insbesondere fest.

Das erste Scheibenlager 66 und das zweite Scheibenlager 68 sind zwischen dem Arbeitsraum 38 und dem ersten Bereich 50 der Lagereinrichtung 34 angeordnet. Sie sind insbesondere unterhalb des ersten Bereichs 50 der Lagereinrichtung 34 und oberhalb des Arbeitsraums 38 positioniert. Das erste Scheibenlager 66 und das zweite Scheibenlager 68 stehen jeweils in Kommunikation mit der Lagereinrichtung 34 (und zwar mit dem ersten Bereich 50 dort) und mit der zugeordneten Werkzeugspindel 18a bzw. 18b.

Ein Scheibenlager 66 bzw. 68 weist eine Mehrzahl von Lagerplätzen 72 auf, welche an einer kreisförmigen Scheibe angeordnet sind. Ein Lagerplatz 72 umfasst beispielsweise eine HSK-Schnittstelle. Die Lagerplätze 72 sind dabei umfänglich um das jeweilige Scheibenlager 66 bzw. 68 verteilt und zwar derart, dass von außen ein an einem Lagerplatz 72 gelagertes Werkzeug entnommen werden kann.

Die Scheibenlager 66 und 68 bilden ein zweites Magazin (Puffermagazin) für Werkzeuge, wobei die Anzahl der Lagerplätze 72 des erstes Scheibenlagers 66 und des zweiten Scheibenlagers 68 jeweils kleiner ist als die Anzahl der Lagerplätze 56 der Lagereinrichtung 34. Beispielsweise weist das erste Scheibenlager 66 und das zweite Scheibenlager 68 jeweils eine Anzahl von zehn Lagerplätzen 72 auf.

Insbesondere sind das erste Scheibenlager 66 und das zweite Scheibenlager 68 gleich ausgebildet.

Es ist (mindestens) eine Übergabestation 74 vorgesehen, welche zur Übertragung von Werkzeugen zwischen der Lagereinrichtung 34 und dem jeweiligen Scheibenlager 66, 68 dient. Die Übergabestation 74 umfasst dabei mindestens einen Platz 76 für ein Werkzeug. Über diesen Platz 76 lässt sich ein Werkzeug an dem entsprechenden Scheibenlager 66, 68 aufnehmen und an die Lagereinrichtung 34 (an den ersten Bereich 50 dort) transportieren bzw. umgekehrt lässt sich ein Werkzeug von der Lagereinrichtung 34 nehmen und dann zu dem entsprechenden Scheibenlager 66 bzw. 68 transportieren.

Bei einem Ausführungsbeispiel umfasst die Übergabestation 74 zwei Plätze 76, sodass gleichzeitig zwei Werkzeuge aufgenommen werden können.

Die Übergabestation 74 ist beweglich ausgestaltet, um eine Übergabe zwischen der Lagereinrichtung 34 und dem jeweiligen Scheibenlager 66, 68 zu ermöglichen.

Die Übergabestation 74 umfasst beispielsweise einen Schlitten für eine Linearbewegung zwischen dem ersten Bereich 50 der Lagereinrichtung 34 und dem entsprechenden Scheibenlager 66, 68 oder beispielsweise ein schwenkbares Element.

Insbesondere ist dem ersten Scheibenlager 66 und dem zweiten Scheibenlager 68 jeweils eine eigene Übergabestation 74 zugeordnet.

Es ist grundsätzlich auch möglich, dass das erste Scheibenlager 66 und das zweite Scheibenlager 68 an einem Schlitten angeordnet sind, welcher an dem Maschinengestell 14 beweglich ist. Dieser Schlitten ist beispielsweise in der Y-Richtung, oder der X-Richtung, oder in der Y-Richtung und X-Richtung beweglich.

Über solch einen Schlitten lässt sich eine Übergabeeinrichtung ausbilden. Durch Bewegung des Schlittens können dann die Scheibenlager 66, 68 in die Nähe des ersten Bereichs 50 der Lagereinrichtung gefahren werden, um eine direkte Übergabe zu ermöglichen.

Es ist auch möglich, auch wenn Übergabestationen 74 vorgesehen sind, dass das erste Scheibenlager 66 und das zweiten Scheibenlager 68 an einem Schlitten 78 angeordnet sind, welcher in der X-Richtung und/oder Y-Richtung und/oder Z-Richtung beweglich ist. Dadurch lässt sich der Schlitten mit dem ersten Scheibenlager 66 und dem zweiten Scheibenlager 68 den Werkzeugspindeln 18a, 18b zuführen.

Es ist alternativ auch möglich, dass für einen Werkzeugaustausch die Werkzeugspindeln 18a, 18b den Scheibenlagern 66, 68 zugeführt werden und zwar derart, dass ein Werkzeugaustausch ermöglicht ist.

Es kann beispielsweise auch vorgesehen sein, dass der Schlitten 78 nur eine Beweglichkeit in der Z-Richtung aufweist. Die Z-Richtung ist parallel zu einer Längserstreckungsrichtung der Werkzeugspindeln 18a, 18b. Durch eine entsprechende Verschieblichkeit des Schlittens 78 in der Z-Richtung lässt sich eine Aushebebewegung für ein Werkzeug erreichen.

Die erfindungsgemäße Werkzeugmaschine funktioniert bezüglich Werkzeugwechseln wie folgt:

Die erste Lagereinrichtung 34 bildet ein Hintergrundmagazin (erstes Magazin) für Werkzeuge. Durch die Scheibenlager 66, 68, wobei jeweils genau ein Scheibenlager einer Werkzeugspindel zugeordnet ist (das erste Scheibenlager 66 ist der ersten Werkzeugspindel 18a zugeordnet und das zweite Scheibenlager 68 ist der zweiten Werkzeugspindel 18b zugeordnet), ist ein Pufferspeicher für Werkzeuge gebildet, wobei die Übergabestation oder Übergabestationen 74 für eine Übergabe von Werkzeugen zwischen der Lagereinrichtung 34 und den Scheibenlagern 66, 68 sorgen. Die Werkzeugspindeln 18a, 18b holen Werkzeuge an den Scheibenlagern 66, 68 ab bzw. liefern dort Werkzeuge ab. (Der Ablieferungsvorgang bzw. Abholvorgang kann dabei aktiv durch die Werkzeugspindeln 18a, 18b durchgeführt werden, indem diese an die Scheibenlager 66, 68 heranfahren, oder es ist grundsätzlich ein passiver Vorgang möglich, indem, wenn die Scheibenlager 66, 68 an dem Schlitten 78 angeordnet sind, der Schlitten 78 an die Werkzeugspindeln 18a, 18b heranfährt. Es ist auch eine kombinierte aktivische Anfahrung sowohl der Werkzeugspindeln 18a, 18b als auch des Schlittens 78 möglich.)

Die jeweiligen Scheibenlager 66, 68 nehmen eine geringere Anzahl von Werkzeugen auf als die Lagereinrichtung 34.

Grundsätzlich weist das Lagersystem 48 mit dem Hintergrundmagazin (die Lagereinrichtung 34) um den Pufferspeicher (dem ersten Scheibenlager 66 und dem zweiten Scheibenlager 68) eine große Kapazität zur Aufnahme von Werkzeugen auf. Da in den Scheibenlagern 66, 68 eine größere Anzahl von Werkzeugen vorgehalten werden können und diese direkt am Rand des Arbeitsraums 38 liegen, lässt sich auch bei komplexeren Bearbeitungsvorgängen, bei denen mehrere Werkzeuge notwendig sind, eine kurze Bereitstellungszeit für Werkzeuge für die Werkzeugspindeln 18a, 18b realisieren. Es ergibt sich dabei eine kurze Span-zu-Span-Zeit von beispielsweise kleiner als 3 s.

Durch das Hintergrundmagazin 34 lässt sich auf einfache und schnelle Weise auch ein Werkzeugaustausch an den Scheibenlagern 66, 68 durchführen.

Da jeder Werkzeugspindel 18a, 18b ein und insbesondere genau ein Scheibenlager 66 bzw. 68 zugeordnet ist, lässt sich ein schneller Werkzeugwechsel auch vorsehen, wenn ein Werkzeugwechsel an mehreren Werkzeugspindeln insbesondere synchron erfolgen soll. Insbesondere lassen sich dadurch synchrone Bearbeitungsvorgänge an zwei Werkstücken innerhalb der gleichen Werkzeugmaschinen mit kurzen Span-zu-Span-Zeiten durchführen.

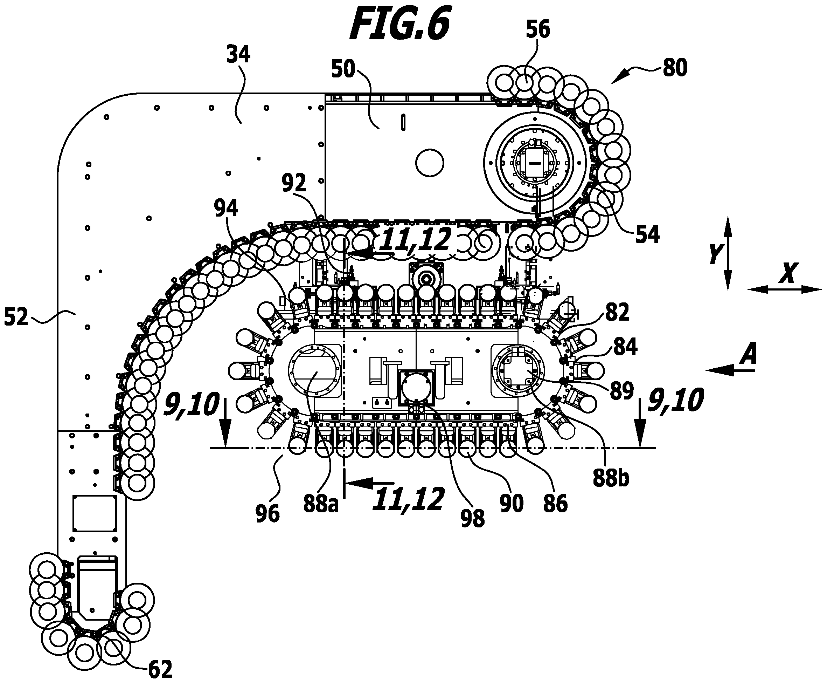

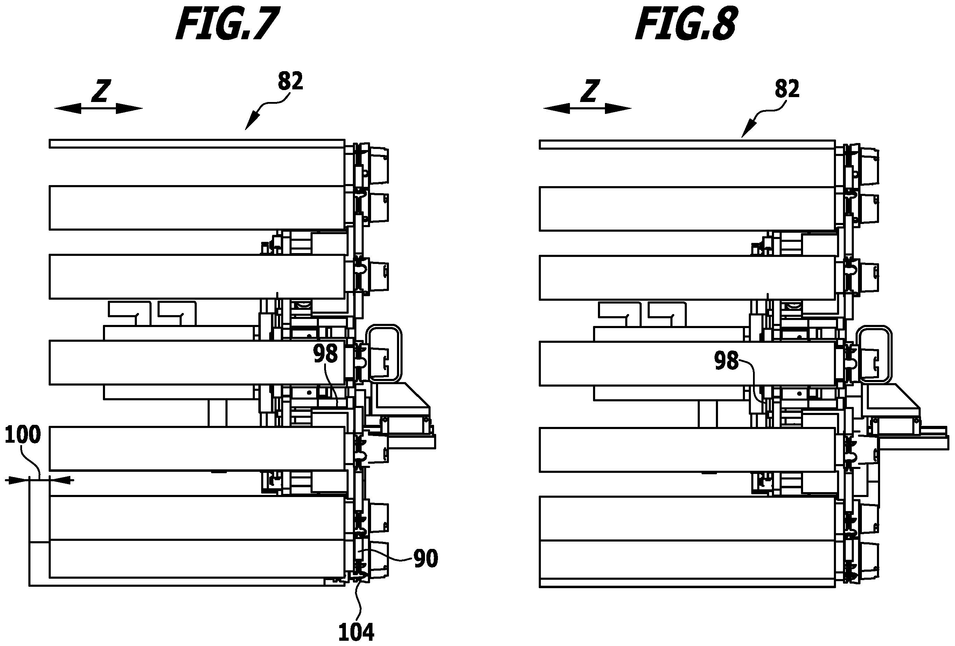

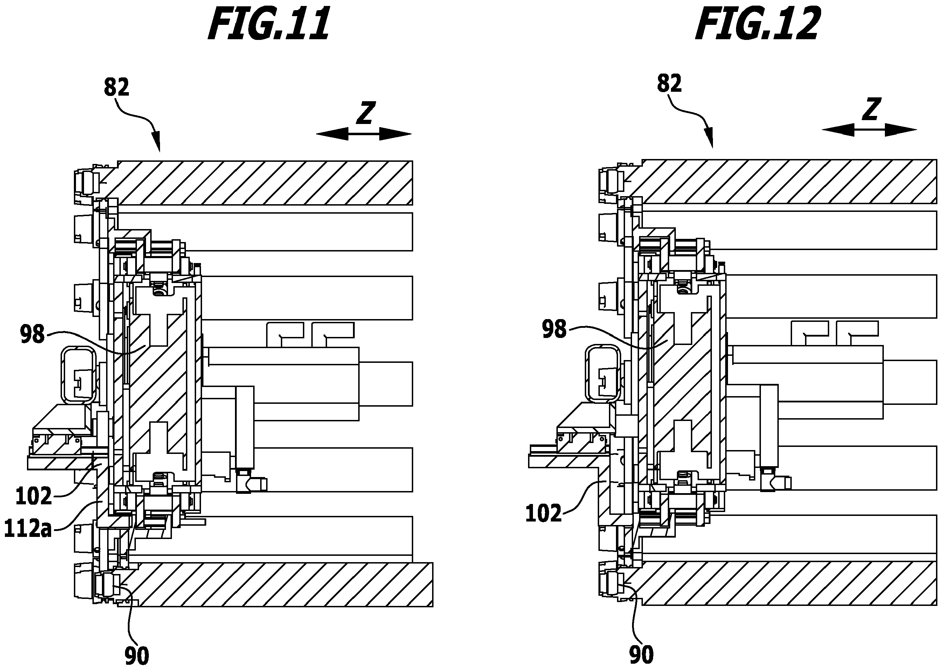

Ein weiteres Ausführungsbeispiel eines Lagersystems, welches in den Figuren 6 bis 11 gezeigt und dort mit 80 bezeichnet ist, umfasst eine an dem Maschinengestell 14 zugeordnete Lagereinrichtung, welche der Lagereinrichtung 34 entspricht. Für gleiche Elemente werden deshalb gleiche Bezugszeichen verwendet. Diese Lagereinrichtung 34 bildet wiederum ein Hintergrundmagazin mit einer Vielzahl von Lagerplätzen 56.

Als zweites Magazin weist das Lagersystem 80 eine Kettenlagereinrichtung 82 auf. Diese Kettenlagereinrichtung 82 ist zwischen dem Arbeitsraum 38 und dem ersten Bereich 50 der Lagereinrichtung 34 angeordnet. Sie ist insbesondere unterhalb des ersten Bereichs 50 und oberhalb des Arbeitsraums 38 angeordnet. Die Kettenlagereinrichtung 82 ist insbesondere unverschieblich an dem Maschinengestell 12 angeordnet. Sie umfasst einen Umlauf-Kettenförderer 84. Dieser Umlauf-Kettenförderer 84 weist eine Kette 86 auf, welche beispielsweise an Umlenkrollen 88a, 88b gelagert ist. Die Kette 86 ist endlos ausgebildet; sie ist geschlossen. Eine Umlaufbewegung der Kette 86 an den Umlenkrollen 88a, 88b ist durch einen Antrieb 89 angetrieben. Es ist dabei möglich, dass eine Bewegung der Kette 86 nur in einer Richtung erfolgt oder in eine Richtung-Gegenrichtung erfolgt.

An der Kette 86 sind eine Mehrzahl von Lagerplätzen 90 angeordnet. Beispielsweise umfassen die Lagerplätze 90 eine jeweilige Hohlschaftkegel (HSK)-Schnittstelle 91. Ein jeweiliger Lagerplatz 90 steht in einer festen Beziehung zu der Kette 86, sodass die Lagerplätze 90 bei einem Transport der Kette 86 mittransportiert werden.

Die Anzahl der Lagerplätze 90 der Kettenlagereinrichtung 82 ist kleiner als die Anzahl der Lagerplätze 56 der Lagereinrichtung 34. Bei einem Ausführungsbeispiel weist die Kettenlagereinrichtung 82 vierunddreißig Lagerplätze 90 auf.

Der Kettenlagereinrichtung 82 sind ein oder mehrere Übergabestationen 92 zugeordnet. Eine Übergabestation 92 weist insbesondere einen oder mehrere bewegliche Plätze entsprechend den Plätzen 76 auf, sodass eine Werkzeugübergabe von der Lagereinrichtung 34 an die Kettenlagereinrichtung 82 erfolgen kann und in umgekehrter Richtung. Die Kettenlagereinrichtung 82 steht über die Übergabestation oder Übergabestationen 92 in Kommunikation mit dem ersten Bereich 50 der Lagereinrichtung 34.

Die Kettenlagereinrichtung 82 weist einen Bereich 94 auf, welcher dem ersten Bereich 50 der Lagereinrichtung 34 zugewandt ist. Sie weist einen gegenüberliegenden Bereich 96 auf, welcher dem Maschinenbett 12 zugewandet ist. An dem Bereich 96 kann eine Übergabe von Werkzeugen zwischen den Werkzeugspindeln 18a, 18b und der Kettenlagereinrichtung 82 erfolgen. Über den Bereich 96 steht die Kettenlagereinrichtung 82 in Kommunikation mit den Werkzeugspindeln 18a, 18b.

Die Kettenlagereinrichtung 82 dient zum Austausch von Werkzeugen sowohl mit der ersten Werkzeugspindel 18a als auch mit der zweiten Werkzeugspindel 18b. Die Kettenlagereinrichtung 82 weist dazu eine entsprechende Ausdehnung in der X-Richtung auf, sodass sowohl die erste Werkzeugspindel 18a als auch die zweite Werkzeugspindel 18b durch die Kettenlagereinrichtung 82 und insbesondere deren Bereich 96 bedient werden können.

An der Kettenlagereinrichtung 82 ist eine Aushebeeinrichtung 98 angeordnet. Die Aushebeeinrichtung 98 ist den Werkzeugspindeln 18a, 18b zugeordnet. Sie ist an einem dem Arbeitsraum 38 zugewandten unteren Bereich der Kettenlagereinrichtung angeordnet, welche den Bereich 96 umfasst. Durch die Aushebeeinrichtung 98 lässt sich in einer Richtung parallel zu einer Längserstreckungsrichtung der Werkzeugspindel 18a, 18b, das heißt in der Z-Richtung, eine Aushebebewegung an der Kettenlagereinrichtung 82 durchführen. Sie bewegt einen Lagerplatz 90 mit der entsprechenden Schnittstelle 91. Ein typischer Aushebeweg 100 (Hub) liegt dabei in der Größenordnung von 40 mm. Durch eine Aushebebewegung lässt sich ein Werkzeug von einer Werkzeugspindel 18a, 18b lösen bzw. durch eine rückwärtige Aushebebewegung lässt sich ein Werkzeug an einer Werkzeugspindel 18a, 18b einsetzen und fixieren.

Es ist dabei grundsätzlich möglich, dass, wie oben beschrieben, die Aushebeeinrichtung 98 auf einen Lagerplatz wirkt, um ein Werkzeug zu bewegen, oder direkt auf ein Werkzeug wirkt und dieses direkt verschiebt.

Bei einem Ausführungsbeispiel weist die Aushebeeinrichtung 98 einen ersten Aushebebereich 102 und einen zweiten Aushebebereich 104 auf. Der erste Aushebebereich 102 ist insbesondere der ersten Werkzeugspindel 18a und der zweite Aushebebereich 104 ist der zweiten Werkzeugspindel 18b zugeordnet.

Ein Aushebebereich 102 bzw. 104 kann dabei auf einen oder mehrere Lagerplätze 90 wirken. Bei dem gezeigten Ausführungsbeispiel wirkt ein Aushebebereich 102 bzw. 104 auf jeweils drei Lagerplätze.

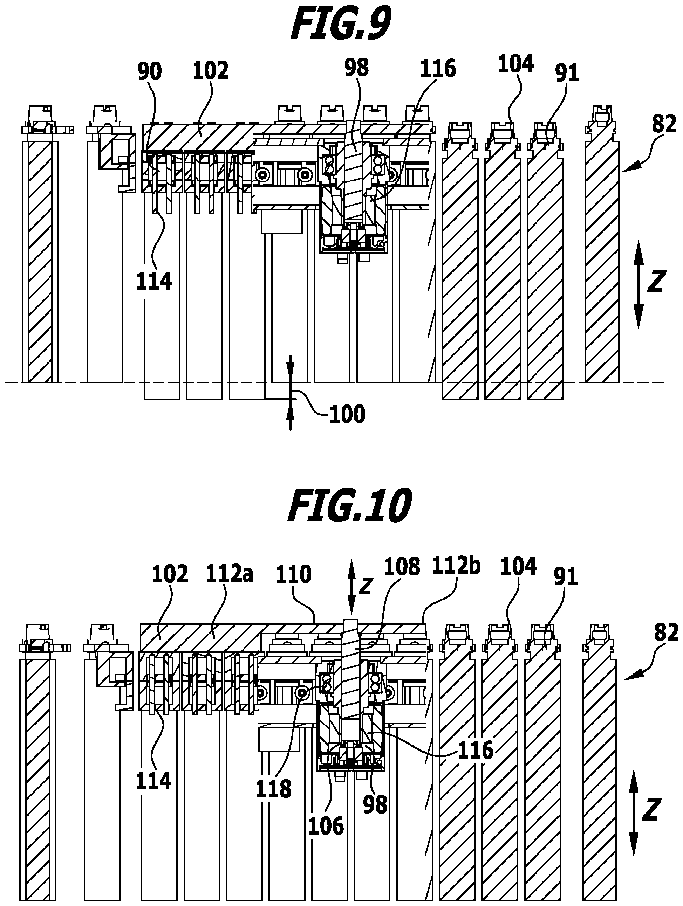

Bei einem Ausführungsbeispiel (siehe insbesondere die Figuren 9 und 10) umfasst die Aushebeeinrichtung 98 eine zentrale Einheit 106. Diese hat eine in Z-Richtung verschiebliche Spindel 108. Zu der Spindel 108 sind der erste Aushebebereich 102 und der zweite Aushebebereich 104 symmetrisch. Beispielsweise ist mit der Spindel 108 und damit mit dieser verschieblich eine Leiste 110 fest verbunden mit einem ersten Bereich 112a und einem zweiten Bereich 112b. Der erste Bereich 112a wirkt auf Lagerplätze 90 auf der einen Seite der Spindel 108 (beispielsweise links von der Spindel 108) und der zweite Bereich 112b wirkt auf Lagerplätze 90 auf der anderen Seite der Spindel 108 (beispielsweise rechts von der Spindel 108).

Die Bereiche 112a, 112b stehen dazu in Verbindung mit Schubelementen 114 der jeweiligen Lagerplätze 90. Durch eine Z-Verschiebung der Spindel 108 werden dann vermittelt über die Leiste 110 die Schubelemente 114 verschoben und wirken dabei auf ein entsprechend an seinem Lagerplatz 90 gehaltenes Werkzeug und verschieben dieses in Z-Richtung, das heißt bewirken den Aushebeweg 100.

Der Spindel 108 ist ein Antrieb 116 zugeordnet, um die entsprechende Hubbewegung zu bewirken. Grundsätzlich kann dieser Antrieb 116 ein motorischer Antrieb oder fluidgetriebener Antrieb sein. Es ist beispielsweise auch möglich, dass der Antrieb 116 durch eine oder mehrere elastische Federn gebildet ist.

Bei einem Ausführungsbeispiel ist der Antrieb 116 über einen Aktuator gebildet, welcher einen Stellmotor und einen Kugelgewindetrieb 118 aufweist. Die Spindel 108 ist Teil des Kugelgewindetriebs 118. Der Stellmotor sorgt für die Positionierung und Feststellung der Spindel 108 in der +Z- und -Z-Position.

Bei einem Beispiel der Figur 10 sind die entsprechenden Schubelemente 114 nicht ausgefahren.

In Figur 9 ist die ausgefahrene Stellung gezeigt. Durch den Antrieb 116 wird die Spindel 108 in Z-Richtung verfahren, und nimmt dabei die Schubelemente 114 mit.
Es kann auch zur Rückstellung der Spindel eine Rückstellfeder vorgesehen sein, durch welche die nicht ausgefahrene Stellung erreicht wird. Es ist grundsätzlich auch möglich, dass eine Feder vorgesehen wird, um die Bewegung von der nicht ausgefahrenen Stellung in die ausgefahrene Stellung zu bewirken.

Durch den Kugelgewindetrieb 118 mit Stellmotor kann grundsätzlich ohne zusätzliche Federwirkung der Übergang zwischen der ausgefahrenen Stellung und der nicht ausgefahrenen Stellung und umgekehrt zwischen der nicht ausgefahrenen Stellung und der ausgefahrenen Stellung bewirkt werden und die entsprechenden ausgezeichneten Positionen können festgestellt werden.

Das erfindungsgemäße Lagersystem 80 funktioniert wie folgt:

Die Lagereinrichtung 34 bildet ein Hintergrundmagazin mit einer größeren Anzahl von Lagerplätzen als die Kettenlagereinrichtung 82. Die Kettenlagereinrichtung 82 bildet ein zweites Werkzeugmagazin als Pufferspeicher. Die Werkzeugspindeln 18a, 18b holen direkt von der Kettenlagereinrichtung 82 Werkzeuge ab bzw. liefern sie dort ab. Die Kettenlagereinrichtung 82 kann eine Mehrzahl von Werkzeugen aufnehmen, wobei die Anzahl von Lagerplätzen 90 geringer ist als die Anzahl von Lagerplätzen 56 der L-förmigen Lagereinrichtung 36.

Die Kettenlagereinrichtung 82 hat ausgewiesene Lagerplätze, nämlich diejenigen Lagerplätze, auf welche die Aushebeeinrichtung 98 wirkt. Über den Umlauf-Kettenförderer 84 lassen sich dabei Lagerplätze 90 in solche ausgewiesenen Lagerplätze "umwandeln", das heißt sie lassen sich in den Wirkbereich der Aushebeeinrichtung 98 transportieren.

Die Aushebeeinrichtung 98 ist symmetrisch ausgebildet, sodass eine Aushebung von einem oder mehreren Lagerplätzen mit Wirksamkeit sowohl für die erste Werkzeugspindel 18a als auch für die zweite Werkzeugspindel 18b erreichbar ist.

Die Werkzeugspindeln 18a, 18b fahren ausgehobene, das heißt in der Z-Richtung nach vorne verschobene Lagerplätze über eine Bewegung in X-Richtung an. Die Werkzeugspindeln 18a, 18b sind dabei insbesondere über eine vorherige Bewegung in der Y-Richtung auf die korrekte Höhenposition für einen Werkzeugaustausch gebracht worden.

Die Aushebeeinrichtung 98 hat einen Aushebehub von vorzugsweise mindestens zwei Lagerplätzen 90 bewirkt. Dadurch kann die jeweilige Werkzeugspindel 18a bzw. 18b an dem zugeordneten Bereich der Kettenlagereinrichtung 82 an einem Lagerplatz ein Werkzeug abgeben und durch entsprechendes Verfahren an einem weiteren Lagerplatz ein neues Werkzeug abholen. Es muss dabei für die jeweilige Werkzeugspindel 18a, 18b dazwischen keine weitere Aushebebewegung durchgeführt werden. Dadurch ergibt sich eine Zeitersparnis. Nach dem Werkzeugaustausch und Wegfahren der entsprechenden Werkzeugspindel 18a bzw. 18b lassen sich dann durch die Rückstellung an der Aushebeeinrichtung 98 alle ausgehobenen Lagerplätze zurückstellen. Auch dadurch ergibt sich eine Zeitersparnis.

Während des Austausches von Werkzeugen an der Kettenlagereinrichtung 82 mithilfe der Aushebeeinrichtung 98 findet kein Umlauf der Kette 86 statt.

Es kann daher gleichzeitig mit dem Werkzeugaustausch an den Werkzeugspindeln 18a, 18b ein Werkzeugaustausch zwischen der Lagereinrichtung 34 und der Kettenlagereinrichtung 82 erfolgen. Es lässt sich dadurch die Stillstandszeit, welche für den Austausch von Werkzeugen an den Werkzeugspindeln 18a, 18b benötigt wird, auch effektiv für einen Werkzeugaustausch zwischen der Kettenlagereinrichtung 82 und der Lagereinrichtung 34 nutzen.

Es lassen sich dadurch auch bei komplexen Werkstückbearbeitungsvorgängen, bei denen eine Mehrzahl von unterschiedlichen Werkzeugen vorgesehen werden müssen, kurze Span-zu-Span-Zeiten erreichen. Es lässt sich ein zeitsparender Werkzeugwechsel durchführen.

### Bezugszeichenliste

- 10: Bearbeitungszentrum
- 12: Maschinenbett
- 14: Maschinengestell
- 16: Werkzeugträgereinrichtung
- 18a: erste Werkzeugspindel
- 18b: zweite Werkzeugspindel
- 20a: Rotationsachse
- 20b: Rotationsachse
- 22: Schlitten
- 24: Schlittenführung
- 26: Antriebseinrichtung
- 28: Schlitten
- 30: Schlittenführung
- 32: Werkstückträger
- 34: Lagereinrichtung
- 36: Werkzeug
- 38: Arbeitsraum
- 40: Werkzeugwechseleinrichtung
- 41: Steuerungseinrichtung
- 42: Schaltkasten
- 44: Vorderseite
- 46: Rückseite
- 48: Lagersystem
- 50: Erster Bereich
- 52: Zweiter Bereich
- 54: Umlauffördereinrichtung
- 56: Lagerplatz
- 58: Werkzeug
- 60: Bereich
- 62: Unterseite
- 64: Boden
- 66: Erstes Scheibenlager
- 68: Zweites Scheibenlager
- 70: Achse
- 72: Lagerplatz
- 74: Übergabestation
- 76: Platz
- 78: Schlitten
- 80: Lagersystem
- 82: Kettenlagereinrichtung
- 84: Umlauf-Kettenförderer
- 86: Kette
- 88a, b: Umlenkrolle
- 89: Antrieb
- 90: Lagerplatz
- 91: Hohlschaftkegel-Schnittstelle
- 92: Übergabestation
- 94: Bereich
- 96: Bereich
- 98: Aushebeeinrichtung
- 100: Aushebeweg
- 102: Erster Aushebebereich
- 104: Zweiter Aushebebereich
- 106: Zentrale Einheit
- 108: Spindel
- 110: Leiste
- 112a: Erster Bereich
- 112b: Zweiter Bereich
- 114: Schubelement
- 116: Antrieb
- 118: Kugelgewindetrieb

## Patentansprüche

1. Werkzeugmaschine, umfassend ein Maschinengestell (14), mindestens eine Werkzeugspindel (18a; 18b), welche an dem Maschinengestell (14) angeordnet ist und relativ zu diesem verschieblich ist, und einen Werkstückträger (32), **dadurch gekennzeichnet, dass** eine Lagereinrichtung (34) für Werkzeuge, welche an dem Maschinengestell (14) angeordnet ist, vorgesehen ist, dass die Lagereinrichtung (34) einen Bereich (50) mit Lagerplätzen (56) aufweist, welcher oberhalb eines Arbeitsraums (38) liegt, und einen Bereich (52) aufweist, welcher neben dem Arbeitsraum (38) liegt, dass eine Kettenlagereinrichtung (82), welche in Kommunikation mit der Lagereinrichtung (34) und der mindestens einen Werkzeugspindel (18a; 18b) steht, vorgesehen ist, dass die Kettenlagereinrichtung (82) eine Aushebeeinrichtung (98) umfasst, durch welche ein oder mehrere Werkzeuge in einer Richtung (Z) parallel zu einer Erstreckungsrichtung der mindestens einen Werkzeugspindel (18a; 18b) verschieblich sind und dass die Kettenlagereinrichtung (82) so angeordnet und ausgebildet ist, dass gleichzeitig mit einem Werkzeugwechsel an der mindestens einen Werkzeugspindel (18a; 18b) ein Werkzeugtausch zwischen der Lagereinrichtung (34) und der Kettenlagereinrichtung (82) durchführbar ist.

2. Werkzeugmaschine nach Anspruch 1, **dadurch gekennzeichnet, dass** die Kettenlagereinrichtung (82) mindestens einer ersten Werkzeugspindel (18a) und einer zweiten Werkzeugspindel (18b) zugeordnet ist.

3. Werkzeugmaschine nach Anspruch 1 oder 2, **dadurch gekennzeichnet, dass** die Lagereinrichtung (34) ein erstes Magazin für Werkzeuge und die Kettenlagereinrichtung (82) ein zweites Magazin für Werkzeuge bildet, und insbesondere dass eine Lagerkapazität für Werkzeuge des ersten Magazins (34) größer ist als die Lagerkapazität der Kettenlagereinrichtung (82).

4. Werkzeugmaschine nach einem der vorangehenden Ansprüche, **dadurch gekennzeichnet, dass** die Lagereinrichtung (34) mindestens 30 Lagerplätze (56) für Werkzeuge aufweist.

5. Werkzeugmaschine nach einem der vorangehenden Ansprüche, **dadurch gekennzeichnet, dass** die Kettenlagereinrichtung (82) zwischen 30 und 50 Lagerplätze (90) für Werkzeuge aufweist.

6. Werkzeugmaschine nach einem der vorangehenden Ansprüche, **dadurch gekennzeichnet, dass** der Bereich (52), welcher neben dem Arbeitsraum liegt, einen Abstand zu einem Untergrund (64) hat, auf welchem ein Maschinenbett (12) aufsteht, welcher höchstens 1,5 m beträgt.

7. Werkzeugmaschine nach einem der vorangehenden Ansprüche, **dadurch gekennzeichnet, dass** die Lagereinrichtung (34) in der Draufsicht eine L-förmige Gestalt hat.

8. Werkzeugmaschine nach einem der vorangehenden Ansprüche, **dadurch gekennzeichnet, dass** die Lagereinrichtung (34) eine Umlauffördereinrichtung (54) umfasst, welche insbesondere als Kettenförderer ausgebildet ist.

9. Werkzeugmaschine nach einem der vorangehenden Ansprüche, **dadurch gekennzeichnet, dass** die Kettenlagereinrichtung (82) einen Umlauf-Kettenförderer (84) umfasst.

10. Werkzeugmaschine nach einem der vorangehenden Ansprüche, **dadurch gekennzeichnet, dass** die Aushebeeinrichtung (98) einen Aushebeweg (100) im Bereich zwischen 20 mm und 60 mm bereitstellt, und insbesondere dass die Aushebeeinrichtung (98) mindestens einen ersten Aushebebereich (102) und einen zweiten Aushebebereich (104) umfasst, durch welche jeweils ein oder mehrere Lagerplätze (90) und/oder Werkzeuge aushebbar sind, wobei insbesondere der erste Aushebebereich (102) einer ersten Werkzeugspindel (18a) und der zweite Aushebebereich (104) einer zweiten Werkzeugspindel (18b) zugeordnet ist, und insbesondere dass der erste Aushebebereich (102) und der zweite Aushebebereich (104) symmetrisch zueinander liegen, und insbesondere dass durch die Aushebeeinrichtung (98) ein oder mehrere Lagerplätze (90) und/oder Werkzeuge aushebbar sind, welche an einer Unterseite der Kettenlagereinrichtung (82) positioniert sind, welche einem Maschinenbett (12) zugewandt ist, und insbesondere dass die Aushebeeinrichtung (98) mindestens eine verschiebliche Spindel (108) umfasst, welche einem oder mehreren Lagerplätzen (90) der Kettenlagereinrichtung (82) zugeordnet ist, und insbesondere dass der mindestens einen Spindel (108) ein Verschiebungsaktuator zugeordnet ist, und insbesondere dass der Verschiebungsaktuator einen Antrieb umfasst, und insbesondere dass die mindestens eine Spindel Teil eines Kugelgewindetriebs (118) ist.

11. Werkzeugmaschine nach einem der vorangehenden Ansprüche, **gekennzeichnet durch** mindestens eine Übergabestation (92) zwischen der Lagereinrichtung (34) und der Kettenlagereinrichtung (82).

12. Verfahren zum Werkzeugwechsel bei einer Werkzeugmaschine gemäß einem der vorangehenden Ansprüche, bei dem die mindestens eine Werkzeugspindel die Kettenlagereinrichtung anfährt, wobei an der Kettenlagereinrichtung ein Lagerplatz und/oder ein Werkzeug in einer Richtung parallel zu einer Erstreckungsachse der mindestens einen Werkzeugspindel ausgehoben ist oder wird und dass gleichzeitig mit einem Werkzeugwechsel zwischen der mindestens einen Werkzeugspindel und der Kettenlagereinrichtung ein Werkzeugaustausch zwischen der Lagereinrichtung und der Kettenlagereinrichtung durchgeführt wird.

13. Verfahren nach Anspruch 12, **dadurch gekennzeichnet, dass** für einen Werkzeugaustausch an der mindestens einen Werkzeugspindel gleichzeitig mindestens ein Bringplatz für ein Werkzeug und ein Holplatz für ein Werkzeug ausgehoben sind.

## Claims

1. Machine tool comprising a machine frame (14), at least one tool spindle (18a; 18b) which is arranged on the machine frame (14) and is displaceable relative thereto, and a workpiece holder (32), **characterised in that** there is provided a storage device (34) for tools which is arranged on the machine frame (14), **in that** the storage device (34) has a region (50) with storage spaces (56) which lies above a working space (38) and has a region (52) which lies beside the working space (38), **in that** there is provided a chain-type storage device (82) which communicates with the storage device (34) and with the at least one tool spindle (18a; 18b), **in that** the chain-type storage device (82) comprises a lifting-out device (98) by means of which one or more tools are displaceable in a direction (Z) parallel to a longitudinal direction of the at least one tool spindle (18a; 18b), and **in that** the chain-type storage device (82) is arranged and configured such that, at the same time as a tool replacement at the at least one tool spindle (18a; 18b) a tool change can be carried out between the storage device (34) and the chain-type storage device (82).

2. Machine tool according to claim 1, **characterised in that** the chain-type storage device (82) is associated with at least one first tool spindle (18a) and a second tool spindle (18b).

3. Machine tool according to claim 1 or 2, **characterised in that** the storage device (34) constitutes a first magazine for tools and the chain-type storage device (82) constitutes a second magazine for tools, and especially **in that** a storage capacity for tools of the first magazine (34) is greater than the storage capacity of the chain-type storage device (82).

4. Machine tool according to one of the preceding claims, **characterised in that** the storage device (34) has at least 30 storage spaces (56) for tools.

5. Machine tool according to one of the preceding claims, **characterised in that** the chain-type storage device (82) has in the range of 30 to 50 storage spaces (90) for tools.

6. Machine tool according to one of the preceding claims, **characterised in that** the region (52) which lies beside the working space is at a distance of not more than 1.5 m from a substrate (64) on which a machine bed (12) stands.

7. Machine tool according to one of the preceding claims, **characterised in that** the storage device (34) has an L-shaped form in plan view.

8. Machine tool according to one of the preceding claims, **characterised in that** the storage device (34) comprises a circulating conveyor (54) which is configured, in particular, as a chain conveyor.

9. Machine tool according to one of the preceding claims, **characterised in that** the chain-type storage device (82) comprises a circulating chain conveyor (84).

10. Machine tool according to one of the preceding claims, **characterised in that** the lifting-out device (98) provides a lifting-out travel (100) in the range between 20 mm and 60 mm, and especially **in that** the lifting-out device (98) comprises at least one first lifting-out region (102) and a second lifting-out region (104) by means of which one or more storage spaces (90) and/or tools can be lifted out, wherein especially the first lifting-out region (102) is associated with a first tool spindle (18a) and the second lifting-out region (104) is associated with a second tool spindle (18b), and especially **in that** the first lifting-out region (102) and the second lifting-out region (104) are arranged symmetrical to one another, and especially **in that** by means of the lifting-out device (98), one or more storage spaces (90) and/or tools which are positioned at an underside of the chain-type storage device (82) which faces a machine bed (12) can be lifted out, and especially **in that** the lifting-out device (98) comprises at least one displaceable spindle (108) which is associated with one or more storage spaces (90) of the chain-type storage device (82), and especially **in that** the at least one spindle (108) is associated with a displacement actuator, and especially **in that** the displacement actuator comprises a drive, and especially **in that** the at least one spindle is part of a ball screw drive (118).

11. Machine tool according to one of the preceding claims, **characterised by** at least one transfer station (92) between the storage device (34) and the chain-type storage device (82).

12. Method for tool replacement on a machine tool according to one of the preceding claims, wherein the at least one tool spindle approaches the chain-type storage device, wherein a storage space and/or a tool is lifted out at the chain-type storage device in a direction parallel to a longitudinal axis of the at least one tool spindle and in that, simultaneously with a tool replacement between the at least one tool spindle and the chain-type storage device, a tool change is carried out between the storage device and the chain-type storage device.

13. Method according to claim 12, **characterised in that** for a tool change at the at least one tool spindle, at least one bring space for a tool and one fetch space for a tool are lifted simultaneously.

## Revendications

1. Machine-outil comprenant un bâti de machine (14), au moins une broche porte-outil (18a ; 18b) disposée sur le bâti de machine (14) et mobile par rapport à celui-ci, et un support de pièce à usiner (32), **caractérisée en ce qu'**un dispositif de stockage (34) disposé sur le bâti de machine (14), est prévu, **en ce que** le dispositif de stockage (34) présente une zone (50) munie d'emplacements de stockage (56) située au-dessus d'un espace de travail (38), et une zone (52) située à côté de l'espace de travail (38), **caractérisée en ce qu'**un dispositif de stockage à chaîne (82) communiquant avec le dispositif de stockage (34) et l'au moins une broche porte-outil (18a ; 18b) est prévu, **en ce que** le dispositif de stockage à chaîne (82) comprend un dispositif de soulèvement (98) au moyen duquel un ou plusieurs outils peuvent être déplacés dans une direction (Z) parallèle à une direction d'extension de l'au moins une broche porte-outil (18a ; 18b) et **en ce que** le dispositif de stockage à chaîne (82) est disposé et conçu de manière à pouvoir procéder à un échange d'outil entre le dispositif de stockage (34) et le dispositif de stockage à chaîne (82) en même temps qu'un changement d'outil sur l'au moins une broche porte-outil (18a ; 18b).

2. Machine-outil selon la revendication 1, **caractérisée en ce que** le dispositif de stockage à chaîne (82) est affecté à au moins une première broche porte-outil (18a) et à une deuxième broche porte-outil (18b).

3. Machine-outil selon la revendication 1 ou la revendication 2, **caractérisée en ce que** le dispositif de stockage (34) constitue un premier magasin pour outils et le dispositif de stockage à chaîne (82) un deuxième magasin pour outils, et en particulier **en ce que** la capacité de stockage d'outils du premier magasin (34) est supérieure à la capacité de stockage d'outils du dispositif de stockage à chaîne (82).

4. Machine-outil selon l'une quelconque des revendications précédentes, **caractérisée en ce que** le dispositif de stockage (34) présente au moins 30 emplacements de stockage (56) d'outils.

5. Machine-outil selon l'une quelconque des revendications précédentes, **caractérisée en ce que** le dispositif de stockage à chaîne (82) présente entre 30 et 50 emplacements de stockage (90) d'outils.

6. Machine-outil selon l'une quelconque des revendications précédentes, **caractérisée en ce que** la zone (52) située à côté de l'espace de travail est distante d'au maximum 1,5 m d'une embase (64) sur laquelle se trouve un socle de machine (12).

7. Machine-outil selon l'une quelconque des revendications précédentes, **caractérisée en ce que** le dispositif de stockage (34), vu de dessus, est en forme de L.

8. Machine-outil selon l'une quelconque des revendications précédentes, **caractérisée en ce que** le dispositif de stockage (34) comprend un dispositif de transport à plateaux (54) conçu en particulier comme convoyeur à chaîne.

9. Machine-outil selon l'une quelconque des revendications précédentes, **caractérisée en ce que** le dispositif de stockage à chaîne (82) comprend un dispositif de transport en carrousel (84).

10. Machine-outil selon l'une quelconque des revendications précédentes, **caractérisée en ce que** le dispositif de soulèvement (98) fournit une course de soulèvement (100) comprise entre 20 mm et 60 mm, et en particulier **en ce que** le dispositif de soulèvement (98) comprend au moins une première zone de soulèvement (102) et une deuxième zone de soulèvement (104) au moyen desquelles un ou plusieurs emplacements de stockage (90) et/ou outils peuvent être soulevés, en particulier la première zone de soulèvement (102) étant affectée à une première broche porte-outil (18a) et la deuxième zone de soulèvement (104) à une deuxième broche porte-outil (18b), et en particulier **en ce que** la première zone de soulèvement (102) et la deuxième zone de soulèvement (104) sont symétriques l'une par rapport à l'autre, et en particulier **en ce que**, au moyen du dispositif de soulèvement (98), il est possible de soulever un ou plusieurs emplacements de stockage (90) et/ou outils positionnés sur un dessous du dispositif de stockage à chaîne (82) lequel est dirigé vers un socle de machine (12), et en particulier **en ce que** le dispositif de soulèvement (98) comprend au moins un broche déplaçable (108) affectée à un ou plusieurs emplacements de stockage (90) du dispositif de stockage à chaîne (82), et en particulier **en ce qu'**un actuateur de translation est affecté à l'au moins une broche (108), et en particulier **en ce que** l'actuateur de translation comprend un entraînement, et en particulier **en ce que** l'au moins une broche est une partie d'une vis d'entraînement à billes (118).

11. Machine-outil selon l'une quelconque des revendications précédentes, **caractérisée par** au moins un poste de transfert (92) entre le dispositif de stockage (34) et le dispositif de stockage à chaîne (82).

12. Procédé pour le changement d'outil sur une machine-outil selon l'une quelconque des revendications précédentes, dans lequel au moins une broche porte-outil approche le dispositif de stockage à chaîne, sur le dispositif de stockage à chaîne un emplacement de stockage et/ou un outil étant soulevé dans une direction parallèle à un axe d'extension de l'au moins une broche porte-outil et **caractérisé en ce qu'**un remplacement d'outil est effectué entre le dispositif de stockage et le dispositif de stockage à chaîne en même temps qu'un changement d'outil entre l'au moins une broche porte-outil et le dispositif de stockage à chaîne.

13. Procédé selon la revendication 12, **caractérisé en ce que**, pour un remplacement d'outil sur l'au moins une broche porte-outil, au moins un emplacement de transfert d'un outil et un emplacement de prélèvement d'un outil sont soulevés en même temps.
